# EUROPEAN PATENT APPLICATION

(11) **EP 4 350 289 A1**
(43) Date of publication of application: **10.04.2024**
(21) Application number: 23197951.9
(22) Date of filing: 18.09.2023
(51) Int. Cl.: G01C 21/00

(54) **NAVIGATION METHOD AND COMPUTER-READABLE STORAGE MEDIUM**

(30) Priority: 07.10.2022 DE 102022210634
(71) Applicant: Airbus Defence and Space GmbH, 82024 Taufkirchen (DE)
(72) Inventor: PAUSINGER, Christian, 82024 Taufkirchen (DE)
(74) Representative: Isarpatent

(57) **Abstract**

The present invention concerns a navigational method including the determination of a position of an object to be navigated as a combination of three coordinates and a representation of the determined position on a digital map, wherein the map has a plurality of predefined spatial segments (110), wherein each of the plurality of predefined spatial segments (110) is determined by a volume and a distinct combination of three coordinates. Furthermore, the present invention concerns a computer-readable storage medium.

## Description

The present invention concerns a navigation system as well as a computer-readable storage medium.

Computer-aided navigation of objects, especially vehicles, is used in many areas, be it in the private or commercial environment. Especially for companies that deal with the transport of goods or passengers, it is of great importance to identify the best possible routes for this transport. However, the shortest route is not always the best, as the nature of the immediate vicinity of the object to be navigated can have an impact and taking this condition into account involves a certain amount of computational effort.

This is particularly the case for the navigation of aircraft, whether manned or unmanned, since, unlike land vehicles, they can usually move freely in three-dimensional space and are not tied to roads or the like. Navigation in a two-dimensional projection of three-dimensional space is sufficient for many applications, but precise consideration of three-dimensional space has so far been associated with high demands on computing power and memory capacity.

Against this background, the present invention is based on the objective of enabling a simplified method for navigation, especially in three-dimensional space, which keeps the requirements for computing power and memory capacity as low as possible.

According to the invention, this objective is achieved by a navigation method having the features of Claim 1, and by a computer-readable storage medium having the features of Claim 10.

Accordingly, a navigation method is provided. The navigation method involves determining the position of an object to be navigated as a combination of three coordinates, and a representation of the determined position on a digital map. The map has a plurality of predefined spatial segments, wherein each of the plurality of predefined spatial segments is determined by a volume and a distinct combination of three coordinates.

In addition, a computer-readable storage medium is provided. The computer-readable storage medium contains commands which, when executed by a computer, cause it to carry out a method according to the invention.

The idea underlying the present invention is to divide the space to be navigated into discrete spatial segments, which can be clearly distinguished from each other. As a result, the position of the object to be navigated can be clearly assigned to one of these spatial segments and all other calculations necessary for navigation can be carried out in the context of this plurality of spatial segments. Since the positions and relationships of the spatial segments, especially relative to each other, are known in advance, the necessary calculations are advantageously simplified, which reduces the requirements for computing and memory capacity.

In this context, the term "volume" is intended to refer to both the shape and the volume content of the corresponding spatial segment. In particular, the spatial extent of the spatial segment should be clearly defined for the present invention. The coordinates used both for the position of the object to be navigated and for the individual spatial segments can be specified as Cartesian coordinates, radial coordinates, especially with reference to the centre of the earth, or geographical coordinates.

Advantageous designs and developments result from the further dependent claims as well as from the description with reference to the figures.

According to a development, the volume of each of the plurality of spatial segments can be in the form of a cuboid, especially of a cube. This form is particularly advantageously suitable for dividing the space under consideration into clearly distinguishable spatial segments.

According to a development, the volume of all of the plurality of spatial segments can be identical. This can advantageously simplify the effort for various calculations concerning the individual spatial segments.

According to another exemplary embodiment, at least one of the plurality of spatial segments may have a different volume than at least one other of the plurality of spatial segments. This embodiment can be advantageous if the space under consideration has very different areas, such as more rural and more urban areas, for which different "resolutions" are necessary. Increased memory consumption due to using the highest possible resolution can thus be avoided.

According to a development, at least one group of adjacent spatial segments may have a similar, in particular identical, volume. This represents a particularly advantageous compromise between the advantages of the two previous developments. According to another exemplary embodiment, the volumes and coordinates of the plurality of spatial segments can be formed in such a way that the plurality of spatial segments fills the entire space. This advantageously ensures that every conceivable position of the object to be navigated can be assigned to one of the plurality of spatial segments.

According to a further exemplary embodiment, each of the plurality pf spatial segments can be assigned further information, in particular regarding the presence of situation-relevant objects. As a result, the nature of the environment of the object to be navigated can be advantageously considered.

According to another exemplary embodiment, the navigation method may also include a display of information important to navigation in the corresponding spatial segments of the map. This enables a user of the navigation method to be provided with advantageously detailed information.

According to another exemplary embodiment, the navigation method may also include determining a destination and a route to the determined destination for the object to be navigated, as well as plotting the determined destination and the determined route on the map. This enables a user of the navigation method to be provided with advantageously detailed information.

The above designs and developments can be combined with each other as desired if it makes sense. Further possible embodiments, developments and implementations of the invention also include combinations of features of the invention that are not explicitly mentioned above or described below with regard to the exemplary embodiments. In particular, the person skilled in the art will also add individual aspects as improvements or additions to the respective basic form of the present invention.

The present invention is explained in more detail below on the basis of the exemplary embodiments indicated in the schematic figures. In the figures:
- Fig. 1: shows a schematic flowchart of a navigation method based on an exemplary embodiment of the present invention;
- Figs. 2a and 2b: show schematic representations of a digital map as well as a plurality of spatial segments for a navigation method according to an exemplary embodiment of the present invention;
- Fig. 3: shows a schematic representation of a plurality of spatial segments for a navigation method according to an exemplary embodiment of the present invention; and
- Figs. 4a to 4c: show a schematic representation of a specific application example for a navigation method based on an exemplary embodiment of the present invention.

The accompanying figures are intended to provide a further understanding of the embodiments of the invention. They illustrate embodiments and are used in the context of describing the explanation of principles and concepts of the invention. Other embodiments and many of the advantages mentioned arise with regard to the drawings. The elements of the drawings are not necessarily shown to scale in relation to each other.

In the figures of the drawing, elements, features and components that are the same, have the same function and have the same effect - unless stated otherwise - are each provided with the same reference signs.

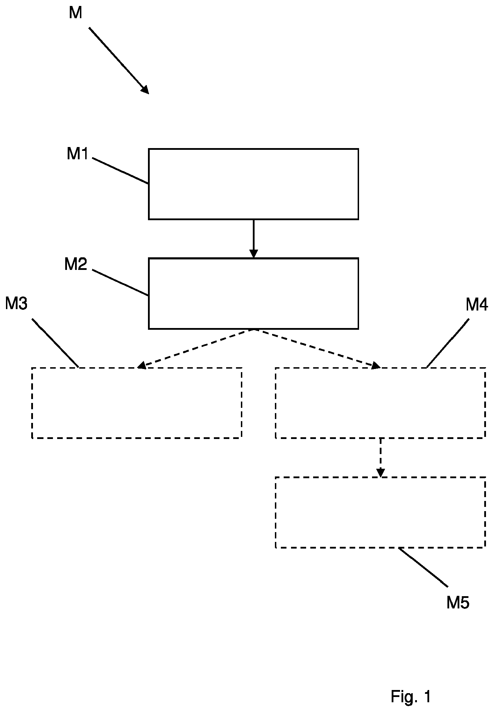

Fig. 1 shows a schematic flowchart of a navigation method M based on an exemplary embodiment of the present invention.

In a first step M1, a position of an object to be navigated is determined. In a second step M2, the determined position of the object to be navigated is plotted on a digital map. The map has a plurality of predefined spatial segments, wherein each of the plurality of predefined spatial segments is determined by a volume and a distinct combination of three coordinates.

In a further optional step M3, information that is important for navigation is displayed in the corresponding spatial segments of the map. In another optional step M4, a destination and a route for the object to be navigated to the destination are determined. In a further optional step M5, the determined destination and the determined route are displayed on the map. The optional steps M3, M4 and M5 are shown with dashed lines.

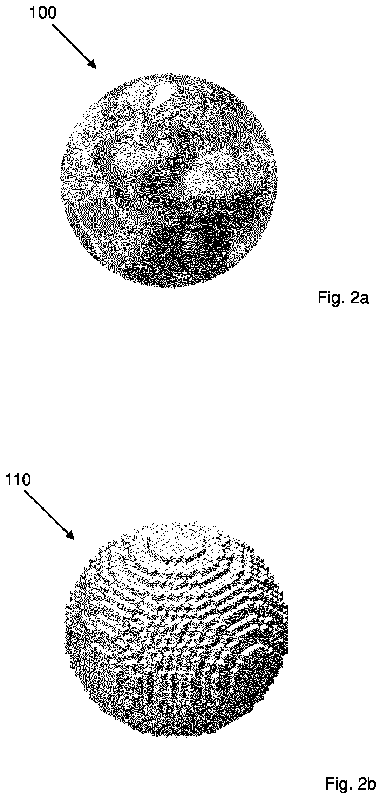

The steps of the method, in particular with regard to the characteristics of the digital map used, are explained in more detail below with reference to Figures 2 to 4.

Fig. 2a shows a schematic representation of a digital map 100 for a navigation method based on an exemplary embodiment of the present invention. Fig. 2b shows a schematic representation of a plurality of spatial segments 110 for a navigation method according to an exemplary embodiment of the present invention.

The digital map 100 shown in Fig. 2a represents the entire surface of the earth. For other application examples, the digital map 100 may also represent only a portion of the surface of the earth, depending on the computing power and data capacity of the computing device used to display the corresponding map 100. As shown in Fig. 2b, the digital map 100 of the surface of the earth may have a plurality of predefined spatial segments 110, which are cubes in the case shown, wherein each part of the surface of the earth can be uniquely assigned to a corresponding spatial segment. The subdivision into spatial segments shown in Fig. 2b is designed very coarsely for reasons of clarity. In a real-world exemplary embodiment, the predefined spatial segments have a much smaller volume, in such a way that multiple spatial segments are provided for each point on a two-dimensional projection of the surface of the earth and are arranged at different heights above the surface of the earth. This also takes into account the fact that the surface of the earth is not perfectly flat but has different heights above sea level at different points.

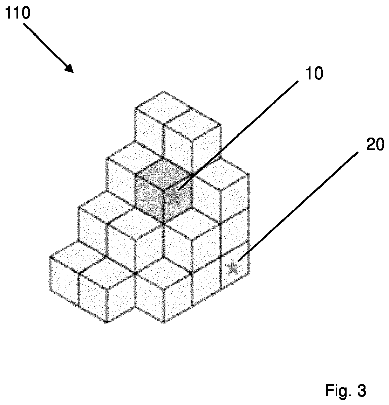

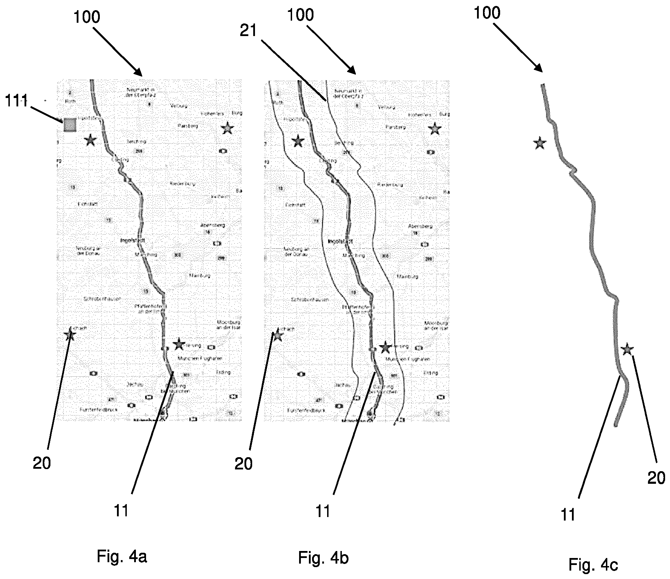

The more detailed functionality of the plurality of predefined spatial segments is explained in more detail below with reference to Figures 3 and 4a to 4c.

Fig. 3 shows a schematic representation of a plurality of spatial segments 110 for a navigation method according to an exemplary embodiment of the present invention.

The spatial segments 110 are shown in the form of identical cubes, which are arranged in a three-dimensional arrangement. A position 10 of an object to be navigated, represented here by a star, can be uniquely assigned to one of the spatial segments. Due to the regular arrangement of the plurality of predefined spatial segments 110, it is easy to determine which of the plurality of predefined spatial segments 110 are close to the spatial segment assigned to the position 10 of the object to be navigated. This also makes it easy to decide whether any information assigned to the individual segments of the plurality of spatial segments 110 is relevant, for example with regard to a position 20 of another object, for the navigation method that is using the digital map 100. An exemplary embodiment of this is explained in more detail below with reference to Figures 4a to 4c.

Figs. 4a to 4c show a schematic representation of a specific application example for a navigation method based on an exemplary embodiment of the present invention.

The digital map shown in Figures 4a to 4c has a plurality of predefined spatial segments, one of which 111 is highlighted for illustrative purposes. Due to the two-dimensional projection of the view, the spatial segments appear here as squares, but are actually cubical. The navigation method described here is a route planning method for a delivery vehicle.

In Fig. 4a, a route 11 is shown that a delivery vehicle is travelling on a return trip after a successful delivery. The delivery vehicle is unladen at this time, so it could take on more cargo. The positions 20 of loads that are waiting for further transport can be clearly assigned to specific spatial segments. However, the delivery vehicle should not take too much of a detour to pick up loads. This means that not all loads waiting for onward transport are even eligible for the delivery vehicle.

In Fig. 4b, it is shown that boundaries 21 can define how far the delivery vehicle can deviate from the determined route 11. It is now easy to determine which positions of loads waiting for onward transport are eligible for the delivery vehicle, since there is no need to determine a distance to the route 11, but only to compare which of the spatial segments assigned to positions 20 of the loads are within the acceptable area. These selected positions 20 can then be displayed in addition to the route, as shown in Fig. 4c.

In Figures 4a to 4c, an application example for a ground-based vehicle was chosen, as this is easier to depict figuratively. However, the advantages of the present navigation method, in particular the use of three-dimensionally arranged spatial segments, arise in a special way when considering aircraft, since the height at which the object to be navigated is located is also important here, especially since, for example, distance determinations in three-dimensional space require more computational effort than on two-dimensional projections of the surface of the earth. For example, the method presented here can be used to compare the specific flight route of an aircraft with known routes of other aircraft, since instead of a time-consuming distance determination it is only necessary to check at which points in a pre-known three-dimensional arrangement the spatial segments assigned to the respective routes are arranged in order to ensure that a distance that reduces the risk of collisions is maintained.

The use case shown in Figures 4a to 4c of a selection of loads waiting for a delivery vehicle for onward transport can also be applied to aircraft, especially to small, unmanned aerial vehicles, such as drones, which move in more urban areas. In such spaces, the routes that a drone can follow can be very complex, which makes it very difficult to determine the length of a deviating route for collecting more loads. With the present method, it is easy to determine which routes are eligible, since "passability of the spatial segment" can be an example of further information that may be relevant for navigation, which can be assigned to each of the spatial segments. To determine the length of the route, it may then be sufficient to count how many of the predefined spatial segments have to be crossed, since the spatial extent of each spatial segment is known in advance. The shortest possible route is then determined by selecting the route that crosses the fewest spatial segments without crossing an impassable spatial segment.

### Reference sign list

- M: Navigation method
- M1: Step of determining a position
- M2: Step of plotting a position
- M3: Step of presenting information
- M4: Step of determining a destination and a route
- M5: Step of presenting a destination and a route
- 100: Map
- 110: Plurality of spatial segments
- 111: Spatial segment
- 10: Position of an object
- 11: Route
- 20: Position of an object
- 21: Boundary

## Claims

1. Navigation method (M) including:
a determination (M1) of a position (10) of an object to be navigated as a combination of three coordinates; and
a representation (M2) of the determined position (10) on a digital map (100);
wherein the map (100) has a plurality of predefined spatial segments (110), wherein each of the plurality of predefined spatial segments (110) is determined by a volume and a distinct combination of three coordinates.

2. Navigation method (M) according to Claim 1, wherein the volume of each of the plurality of spatial segments (110) is in the form of a cuboid, in particular of a cube.

3. Navigation method (M) according to Claim 1 or 2, wherein the volume of all the plurality of spatial segments (110) is identical.

4. Navigation method (M) according to Claim 1 or 2, wherein at least one of the plurality of spatial segments (110) has a different volume than at least one other of the plurality of spatial segments (110).

5. Navigation method (M) according to Claim 4, wherein at least one group of adjacent spatial segments has a similar, in particular identical, volume.

6. Navigation method (M) according to any one of the preceding claims,
wherein the volumes and coordinates of the plurality of spatial segments (110) are formed in such a way that the plurality of spatial segments fills the entire space (110).

7. Navigation method (M) according to any one of the preceding claims,
wherein each of the plurality of spatial segments (110) is assigned further information, in particular concerning the presence of situation-relevant objects.

8. Navigation method (M) according to Claim 7, further including a representation (M3) of information important to navigation in the corresponding spatial segments of the map.

9. Navigation method (M) according to any one of the preceding claims, further including a determination (M4) of a destination and a route to the determined destination for the object to be navigated and a representation (M5) of the determined destination and the determined route on the map.

10. Computer-readable storage medium containing commands which, when executed by a computer, cause it to carry out a method according to any one of Claims 1 to 9.
